# NEUE EUROPÄISCHE PATENTSCHRIFT

(11) **EP 3 205 493 B2**
(45) Veröffentlichungstag und Bekanntmachung des Hinweises auf die Entscheidung über den Einspruch: **02.07.2025**
(45) Hinweis auf die Patenterteilung: 17.10.2018
(21) Anmeldenummer: 16206642.7
(22) Anmeldetag: 23.12.2016
(51) Int. Cl.: B32B 5/02, B32B 25/04, B32B 25/14, B32B 1/08, B32B 3/30, F16L 11/04, F16L 11/127, F16L 11/20

(54) **SCHLAUCHLEITUNG FÜR EIN FLUID UND VERFAHREN ZUM HERSTELLEN EINER SOLCHEN SCHLAUCHLEITUNG**
HOSE LINE FOR A FLUID AND METHOD FOR PRODUCING SUCH A HOSE LINE
TUYAU SOUPLE POUR UN FLUIDE ET PROCÉDÉ DE PRODUCTION D'UN TEL TUYAU

(30) Priorität: 10.02.2016 DE 102016102303; 10.02.2016 DE 202016100668 U
(43) Veröffentlichungstag der Anmeldung: 16.08.2017
(73) Patentinhaber: VERITAS AG, 63571 Gelnhausen (DE)
(72) Erfinder: VAN HOOREN, Marc, 63579 Freigericht (DE); SCHULZ, Volker, 63607 Wächtersbach (DE); ZÜLCH, Wilfried, 63571 Gelnhausen (DE)
(74) Vertreter: Patentship Patentanwaltsgesellschaft mbH

(56) Entgegenhaltungen:
- EP-A1- 1 484 172
- EP-A1- 2 918 885
- EP-A1- 2 977 191
- EP-A1- 2 979 853
- EP-A2- 1 188 552
- WO-A1-2006/066944
- WO-A1-2009/071183
- WO-A1-99/61227
- DE-A1- 102009 012 311
- DE-A1- 102014 103 479
- DE-B4- 102007 058 721
- DE-U1- 20 320 567
- JP-A- 2007 191 576
- US-A- 5 170 011
- US-A1- 2004 142 135
- US-A1- 2007 218 233
- "Elastomer FPM", RUBBER TECHNOLOGY, 27 May 2016 (2016-05-27), XP055633719, Retrieved from the Internet <URL:https://web.archive.org/web/20160527192319/https://rubbertechnology.info/en/-rubber-compounds/elastomer-fpm/>

## Beschreibung

Die vorliegende Erfindung betrifft eine Schlauchleitung für ein Fluid sowie ein Verfahren zum Herstellen einer solchen Schlauchleitung.

Im Stand der Technik sind beispielweise Schlauchleitungen zur Leitung von Kraftstoffen in Fahrzeugen bekannt. Diese weisen eine Trägerschicht auf, um eine erforderliche mechanische Festigkeit z. B. gegen Zugbeanspruchungen oder Kraftstoffdruck zu erzielen und um die Schlauchleitung vor äußeren mechanischen Beschädigungen zu schützen. Sie weisen ferner häufig neben der Trägerschicht eine Sperrschicht auf, um zu verhindern, dass Kraftstoff durch die Wandung der Schlauchleitung hindurchdiffundieren kann, soweit die Trägerschicht selbst eine Diffusion nicht hinreichend verhindert.

Gesetzliche Anforderungen, beispielsweise die amerikanischen PZEV- oder SULEV-Anforderungen, fordern von den Bauteilen eines Kraftfahrzeuges, und damit insbesondere auch von den Schlauchleitungen zur Leitung von Kraftstoffen, einen wirksamen Schutz gegen Diffusion von Kraftstoffen in die Umwelt.

Die Druckschrift WO 2006/066944 A1 offenbart einen mehrschichtigen Schlauch zum Leiten von Flüssigkeiten.

Die Druckschrift EP 2 918 885 A1 offenbart eine Schlauchleitung für ein Fluid.

Die Druckschrift EP 1 188 552 A2 offenbart einen mehrschichtigen Schlauch zum Fördern von Kraftstoffen.

Die Druckschrift WO 2009/071183 A1 offenbart eine mehrschichtige Leitung zum Transport von Kraftstoffen.

Die Druckschrift EP 2 977 191 A1 offenbart ein Verfahren zur Herstellung von Schlauchrohlingen.

Die Druckschrift EP 2 979 853 A1 offenbart ein mehrschichtiges Blasformrohr mit säurebeständiger Innenschicht.

Es ist daher die Aufgabe der vorliegenden Erfindung, eine Schlauchleitung bereitzustellen, die einen verbesserten Schutz gegen Diffusion eines die Schlauchleitung durchströmenden Fluids ermöglicht, ohne die mechanischen oder dynamischen Eigenschaften der Schlauchleitung zu verschlechtern, sowie ein Verfahren zum Herstellen einer solchen Schlauchleitung.

Diese Aufgabe wird durch eine Schlauchleitung mit den Merkmalen nach Anspruch 1 gelöst. Ferner wird die Aufgabe durch ein Verfahren zum Herstellen einer Schlauchleitung mit den Merkmalen nach Anspruch 7 gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Schlauchleitung für ein Fluid mit einer Trägerschicht, einer ersten Sperrschicht, insbesondere aus einem ersten Material, die ausgebildet ist, Diffusion des Fluids durch die Wandung der Schlauchleitung zu verhindern, und einer zweiten Sperrschicht, insbesondere aus einem zweiten Material, wobei die erste Sperrschicht auf der Innenseite des Schlauches angeordnet ist und die zweite Sperrschicht zwischen der ersten Sperrschicht und der Trägerschicht angeordnet ist, gelöst. Die Sperrschichten sind dabei so ausgebildet, dass sie die Diffusion eines Fluids durch die Wandung der Schlauchleitung wirksam verhindern können, d.h. ihre Durchlässigkeit für das in der Schlauchleitung transportierte Fluid ist sehr gering. Die Trägerschicht bewirkt hingegen vorrangig mechanische Stabilität der Schlauchleitung, beispielsweise gegen Druck- oder Zugbelastung sowie gegen äußere mechanische Einwirkungen, die zu einer Beschädigung der Schlauchleitung führen können. Hingegen kann die Trägerschicht eine höhere Durchlässigkeit für das Fluid aufweisen als die Sperrschichten.

Die Trägerschicht ist bei der erfindungsgemäßen Ausführung auf der Außenseite, d.h. der der Umgebung zugewandten Seite der Schlauchleitung angeordnet, während auf der Innenseite der Schlauchleitung, d.h. der dem transportierten Fluid zugewandten Seite, eine der Sperrschichten angeordnet ist. Dadurch wird verhindert, dass das Fluid durch die Wandung der Schlauchleitung hindurchdiffundiert und in die Trägerschicht gelangen kann, was zu einer Zerstörung oder einer Herabsetzung der mechanischen Festigkeit der Trägerschicht führen kann. Durch diese Anordnung kann für die Trägerschicht ein Material gewählt werden, das zwar die gewünschten mechanischen Eigenschaften aufweist, aber nicht notwendigerweise beständig gegen das in der Schlauchleitung transportierte Fluid ist. Da die Trägerschicht die erforderlichen mechanischen Eigenschaften gewährleistet, können die Sperrschichten weitgehend oder ausschließlich auf den Schutz gegen Diffusion optimiert sein, können jedoch sehr dünn ausgebildet werden und müssen nur geringe mechanische Festigkeit aufweisen.

Durch die Anordnung zweier Sperrschichten benachbart zueinander kann ein optimaler Schutz gegen Diffusion erzielt werden. Dies ist insbesondere dann möglich, wenn die beiden Sperrschichten aus unterschiedlichen Materialien ausgebildet werden. Dann können beispielsweise die beiden Sperrschichten jeweils auch im Hinblick auf die Diffusion unterschiedlicher Bestandteile des zu transportierenden Fluids optimiert werden, d.h. eine Sperrschicht verhindert die Diffusion von Bestandteilen, während die andere Sperrschicht die Diffusion anderer Bestandteile verhindert, für die die erste Sperrschicht eine geringere Sperrwirkung aufweist. Ferner ermöglicht es die benachbarte Anordnung zweier Sperrschichten, eine Trägerschicht zu verwenden, die zwar bei der Herstellung eine mechanisch ausreichende Verbindung mit dem Material einer der Sperrschichten eingeht, die aber nicht ausreichend mit dem Material der anderen Sperrschicht verbindbar ist. Die zwischengeordnete Sperrschicht wirkt damit als Haftvermittler zwischen der anderen Sperrschicht und der Trägerschicht.

Erfindungsgemäß weist die Schlauchleitung ferner einen elektrisch leitfähigen Streifen zum Ableiten elektrischer Ladung auf, der auf der Innenseite des Schlauches angeordnet ist. Dadurch kann als auf der Innenseite der Schlauchleitung angeordnete Sperrschicht eine Sperrschicht aus elektrisch nicht leitfähigem Material eingesetzt werden, und die Ableitung elektrischer Ladungen erfolgt durch einen elektrisch leitfähigen Streifen. Dieser kann aus metallischem Material, aber auch aus einem elektrisch leitfähigen Kunststoff bestehen. Dabei kann ein Streifen vorgesehen sein, es können aber auch mehrere, beispielsweise vier Streifen vorgesehen sein, die gleichmäßig über den Umfang der Schlauchleitung an ihrer Innenseite verteilt angeordnet sind.

In einer weiteren vorteilhaften Ausgestaltung weist die auf der Innenseite des Schlauches angeordnete Schicht eine Vertiefung zum Aufnehmen des elektrisch leitfähigen Streifens auf. Dadurch ragt der elektrisch leitfähige Streifen nicht in das Innere der Schlauchleitung hinein, sondern die Innenseite weist eine weitgehend glatte Wandung auf. Dadurch können strömungsmechanisch günstigere Eigenschaften der Schlauchleitung erzielt werden.

Erfindungsgemäß weist die Schlauchleitung neben der Trägerschicht, d.h. einer ersten Trägerschicht, eine weitere Trägerschicht, d.h. eine zweite Trägerschicht auf, wobei die zweite Trägerschicht relativ zur ersten Trägerschicht im Inneren des Schlauches angeordnet ist, sowie eine Zwischenschicht, die zwischen der ersten Trägerschicht und der zweiten Trägerschicht angeordnet ist.

Durch die Einführung einer Zwischenschicht können die mechanischen Eigenschaften der Schlauchleitung weiter verbessert werden. Beispielsweise kann Zwischenschicht verwendet werden, die gegenüber der Trägerschicht eine verbesserte Druckbeständigkeit aufweist. Dadurch sind beispielsweise höhere Kraftstoffdrücke möglich. Durch die Verwendung mehrerer Schichten können durch geeignete Gestaltung der einzelnen Schichten die mechanischen Eigenschaften optimiert werden, so dass optimale Eigenschaften bei gleichzeitiger Material- oder Gewichtsersparnis erzielt werden. Beispielsweise kann bei Verwendung einer Zwischenschicht eine der Trägerschichten dünn gestaltet werden und vorrangig als Haftvermittler zwischen der Zwischenschicht und einer der Sperrschichten dienen, und die andere, auf der Außenseite der Schlauchleitung angeordnete Trägerschicht kann ebenfalls dünn gestaltet werden, um überwiegend vor äußeren Umwelteinflüssen zu schützen, beispielsweise als reine Deckschicht. Die mechanischen Eigenschaften der Schlauchleitung werden dann weitgehend durch die Zwischenschicht bestimmt.

Erfindungsgemäß ist die Zwischenschicht als ein textiler Druckträger ausgebildet, der geflochten, spiralisiert oder gestrickt ist und p-Aramid-, POD-, Polyamid- und/oder PET-Fasern umfasst. Eine Zwischenschicht in Form eines textilen Druckträgers verleiht der Schlauchleitung insbesondere eine hohe Druckfestigkeit. Aber auch die Zugfestigkeit und der Schutz vor mechanischen Beschädigungen kann durch eine solche Zwischenschicht erhöht werden.

Erfindungsgemäß enthält eine Trägerschicht ein Epichlorhydrin-Elastomer, handelsüblich auch mit ECO abgekürzt, ein Acrylat-Elastomer, handelsüblich auch mit ACM abgekürzt, oder ein Ethylenacrylat-Elastomer, handelsüblich auch mit AEM abgekürzt. Diese Materialien können in einer der Trägerschichten oder in einer Ausführung mit zwei Trägerschichten auch in beiden Trägerschichten enthalten sein. Diese Materialien können in den Trägerschichten enthalten sein, entweder anteilig oder überwiegend, oder die Trägerschichten können auch vollständig aus diesen Materialien bestehen. Diese Materialien verbinden gute mechanische Eigenschaften mit guter Verarbeitbarkeit und guter Haftung mit Zwischenschichten und Sperrschichten und können daher auch als Haftvermittler zwischen den einzelnen Schichten wirken.

Erfindungsgemäß besteht eine der Sperrschichten überwiegend aus thermoplastischem Fluorelastomer-Vulkanisat, handelsüblich auch mit F-TPV abgekürzt, und die andere Sperrschicht überwiegend aus einem Fluorelastomer (FPM) bzw. (FKM). FPM, bzw. FKM stehen beide für Fluorelastomere, wohingegen Kautschuke nicht vernetzt sind und sich daher nur als Ausgangsmaterial für die Elastomere eignen. Alternativ kann eine der Sperrschichten auch überwiegend aus einem thermoplastischen Fluorelastomer, insbesondere Fluor TPE, bestehen. Dabei kann es sich jeweils um Ter- oder Copolymere handeln kann. Diese Materialien bewirken einen wirksamen Schutz vor Diffusion. Die beiden Sperrschichten aus den jeweiligen Materialien können benachbart zueinander angeordnet und dabei miteinander verbunden werden, so dass ausreichende Haftung zwischen ihnen besteht. Durch die Verwendung dieser Materialien können die gesetzlichen Anforderungen an die zulässige Diffusion von Kraftstoffen durch die Wandungen von Schlauchleitungen von Kraftstoffen erfüllt werden. Das thermoplastische Fluorelastomer-Vulkanisat kann durch Einlagerung leitfähiger Füllstoffe, beispielsweise von Ruß, auch elektrisch leitfähig gemacht werden.

In einer weiteren vorteilhaften Ausgestaltung weist das thermoplastische Fluorelastomer-Vulkanisat (F-TPV) eine thermoplastische Matrix aus Fluorharzen auf, in die Bereiche aus thermoplastischem Fluorelastomer oder Fluorkautschuk (FPM, FKM) einvulkanisiert sind. Dadurch kann eine sehr dünne Sperrschicht mit gummiähnlichen Eigenschaften erzielt werden.

In einer weiteren vorteilhaften Ausgestaltung weist die Sperrschicht aus thermoplastischem Fluorelastomer-Vulkanisat eine Schichtdicke zwischen 0,15 mm und 3,0 mm und die Sperrschicht aus thermoplastischem Fluorelastomer oder Fluorkautschuk eine Schichtdicke zwischen 0,8 mm und 1,5 mm auf. Durch diese Schichtdicken kann ein geforderter Schutz gegen Diffusion sichergestellt werden, wobei gleichzeitig die Schichten so gestaltet sind, dass sie eine mechanisch ausreichende Festigkeit aufweisen und eine Haftung der Schichten aneinander sichergestellt ist, so dass eine die Herstellung problemlos beispielsweise durch Extrusion möglich ist.

Erfindungsgemäß ist die Sperrschicht aus Fluorelastomer-Vulkanisat auf der mit einem zu transportierenden Fluid in Berührung stehenden Innenseite der Schlauchleitung angeordnet und bildet damit die erste Sperrschicht, und die Sperrschicht aus Fluorkautschuk bzw. Fluorelastomer ist zu der Sperrschicht aus thermoplastischem Fluorelastomer-Vulkanisat (F-TPV) benachbart angeordnet und bildet damit die zweite Sperrschicht. Die Sperrschicht aus Fluorkautschuk bzw. Fluorelastomer bildet erfindungsgemäß durch Vulkanisation ein Haftsystem zwischen der Sperrschicht aus thermoplastischem Fluorelastomer-Vulkanisat und einer der Sperrschicht aus Fluorkautschuk bzw. Fluorelastomer benachbarten Trägerschicht aus Epichlorhydrin-Elastomer.

In einer weiteren vorteilhaften Ausgestaltung weist der elektrisch leitfähige Streifen in radialer Richtung, d.h. in Richtung zur Innenseite der Schlauchleitung, eine Dicke zwischen 30 µm und 60 µm auf. Dadurch kann der elektrische Streifen einerseits in die Schlauchwandung, insbesondere in die an der Innenseite angeordnete Sperrschicht eingebettet werden. Ist der Streifen hingegen nicht in die an der Innenseite angeordnete Sperrschicht eingebettet, so wird durch die vorgeschlagene Dicke bewirkt, dass die Strömung im Inneren des Schlauches nur geringfügig beeinflusst wird.

Gemäß einem zweiten Aspekt der Erfindung wird ein Verfahren zum Herstellen einer erfindungsgemäßen Schlauchleitung für ein Fluid vorgeschlagen. Das Verfahren umfasst dabei als Schritte das Bereitstellen einer Trägerschicht, das Bereitstellen einer ersten Sperrschicht, die ausgebildet ist, die Diffusion des Fluids zu verhindern, das Bereitstellen einer zweiten Sperrschicht, das Anordnen der zweiten Sperrschicht auf der Innenseite der Trägerschicht, das Anordnen der ersten Sperrschicht auf der Innenseite der zweiten Sperrschicht sowie das Verbinden der Trägerschicht mit der zweiten Sperrschicht und das Verbinden der zweiten Sperrschicht mit der ersten Sperrschicht, insbesondere durch Vulkanisation. Die Schichten können auch auf andere Weise als durch Vulkanisation miteinander verbunden werden, beispielsweise durch einen Haftvermittler zum Verkleben der Schichten miteinander. Auch ist es möglich, beispielsweise die zweite Sperrschicht mit der ersten Trägerschicht durch verkleben zu verbinden, und die erste Sperrschicht anschließend mit der zweiten Sperrschicht durch Vulkanisation zu verbinden.

In einer weiteren vorteilhaften Ausgestaltung des Verfahrens werden eine, mehrere und insbesondere auch alle Schichten durch Extrusionsverfahren bereitgestellt. So können beispielsweise die Sperrschichten durch Extrusionsverfahren hergestellt sein, während die Trägerschicht durch ein anderes Verfahren hergestellt wird. Vorzugsweise werden jedoch alle drei genannten Schichten durch Extrusion hergestellt. Die Zwischenschicht in Form eines textilen Druckträgers wird umflochten, umstrickt oder spiralisiert aufgetragen.

Ausführungsbeispiele der Erfindung werden nachfolgend anhand der beigefügten Zeichnungen beschrieben.

Es zeigen:
Fig. 1: einen Querschnitt einer ersten Ausgestaltung der Schlauchleitung, und
Fig. 2: eine perspektivische Ansicht einer weiteren Ausgestaltung der Schlauchleitung.

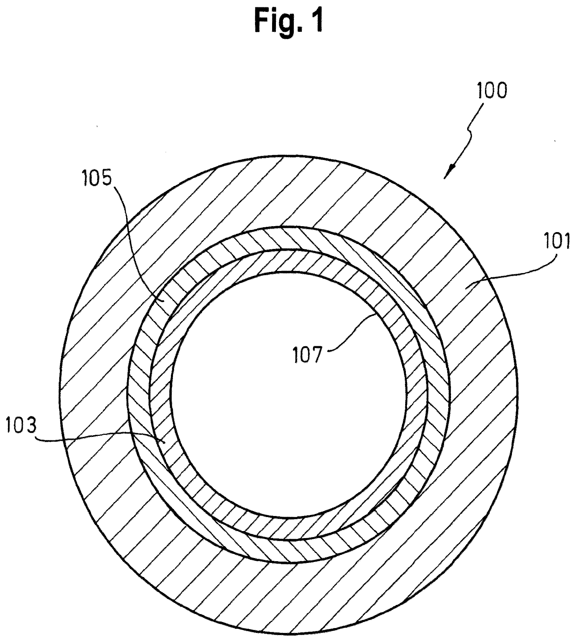

Fig. 1 zeigt eine erste Ausführungsform der erfindungsgemäßen Schlauchleitung 100 in Querschnittsansicht. Die Schlauchleitung 100 weist eine Trägerschicht 101 auf. Diese sorgt für die geforderte mechanische Festigkeit der Schlauchleitung 100 beispielsweise gegen Zuglasten, Druck des in der Schlauchleitung 100 strömenden Fluids sowie gegen mechanische Beschädigungen durch äußere Einwirkungen. Die Trägerschicht 101 kann beispielsweise aus einem Epichlorhydrin-Elastomer, einem Acrylat-Elastomer oder einem Ethylenacrylat-Elastomer bestehen, oder dies enthalten.

Auf der Innenseite 107 der Schlauchleitung 100, d.h. in Kontakt mit einem in der Schlauchleitung 100 strömenden Fluid, ist eine erste Sperrschicht 103 angeordnet. Die erste Sperrschicht 103 ist beständig gegen das Fluid und verhindert die Diffusion des Fluids durch die erste Sperrschicht 103, vorzugsweise in einem höheren Maße, als die Trägerschicht 101 die Diffusion verhindern könnte.

Die erste Sperrschicht 103 ist vorzugsweise wesentlich dünner als die Trägerschicht 101. Die erste Sperrschicht 103 besteht vorzugsweise vollständig oder überwiegend aus thermoplastischem Fluorelastomer-Vulkanisat oder Fluorelastomer. Das thermoplastische Fluorelastomer-Vulkanisat weist vorzugsweise eine thermoplastische Matrix aus Fluorharzen auf, in die Bereiche aus Fluorkautschuk einvulkanisiert sind.

Zwischen der Trägerschicht 101 und der ersten Sperrschicht 103 ist eine zweite Sperrschicht 105 angeordnet. Diese verhindert die weitere Diffusion eines bereits durch die erste Sperrschicht 103 diffundierten Fluids. Die zweite Sperrschicht 105 kann ebenfalls vorzugsweise vollständig oder überwiegend aus thermoplastischem Fluorelastomer-Vulkanisat oder Fluorelastomer bestehen. Dabei unterscheiden sich vorzugsweise die Materialien der beiden Sperrschichten 103, 105, so dass die Sperrschichten 103, 105 unterschiedliche Eigenschaften aufweisen, beispielsweise die zweite Sperrschicht 105 die Diffusion von Bestandteilen des Fluids wirksam verhindert, die durch die erste Sperrschicht 103 hindurchdiffundieren können oder die zweite Sperrschicht 105 nicht in demselben Maß gegen das Fluid beständig sein muss wie die erste Sperrschicht 103.

In der in Fig. 1 dargestellten Ausführung besteht die erste Sperrschicht 103 aus thermoplastischem Fluorelastomer-Vulkanisat (F-TPV) und die zweite Sperrschicht 105 besteht aus Fluorelastomer (FPM). Die erste Sperrschicht 103 aus thermoplastischem Fluorelastomer-Vulkanisat weist hierbei eine Schichtdicke von 0,28 mm und die zweite Sperrschicht 105 aus Fluorkautschuk weist eine Schichtdicke von 1,3 mm auf. Die zweite Sperrschicht 105 aus Fluorelastomer, die zwischen der ersten Sperrschicht 103 und der Trägerschicht 101 angeordnet ist, bildet in der in Fig. 1 gezeigten Ausführung durch Vulkanisation ein Haftsystem zwischen der ersten Sperrschicht 103 aus Fluorelastomer-Vulkanisat und der Trägerschicht 101, die hier aus Epichlorhydrin-Elastomer gebildet ist, und führt damit neben einer verringerten Diffusion auch zu fertigungstechnischen Vorteilen.

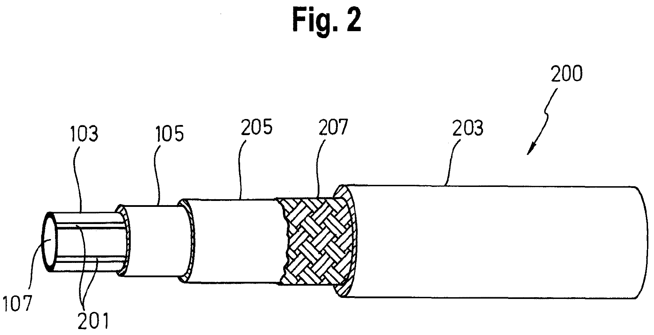

In Fig. 2 ist eine weitere Ausführung 200 der Schlauchleitung dargestellt. Die Ausführung gemäß Fig. 2 weist eine erste Trägerschicht 203, eine zweite Trägerschicht 205, und eine zwischen der ersten Trägerschicht 203 und der zweiten Trägerschicht 205 angeordnete Zwischenschicht 207 auf. Um die Diffusion eines im Inneren der Schlauchleitung 200 strömenden Fluids durch die Wandung der Schlauchleitung 200 zu unterbinden, weist die Schlauchleitung ferner eine erste Sperrschicht 103 sowie eine zweite Sperrschicht 105 auf. Die erste Sperrschicht 103 ist auf der Innenseite der Schlauchleitung 200 angeordnet. Die zweite Sperrschicht 105 ist zwischen der ersten Sperrschicht 103 und der zweiten Trägerschicht 205 angeordnet.

Die zwischen der ersten Trägerschicht 203 und der zweiten Trägerschicht 205 angeordnete Zwischenschicht 207 ist bei der dargestellten Ausführung als textiler Druckträger ausgebildet. Die in Form eines textilen Druckträgers ausgebildete Sperrschicht kann beispielsweise geflochten, spiralisiert oder gestrickt sein und aus p-Aramid-, POD-, Polyamid- und/oder PET-Fasern bestehen. Die Zwischenschicht 207 nimmt Druckkräfte des im Inneren der Schlauchleitung 200 strömenden Fluids auf, und sie kann auch Zugkräfte aufnehmen sowie die Schlauchleitung 200 vor äußeren mechanischen Beschädigungen schützen, um beispielsweise Leckagen zu verhindern, und sie ermöglicht auch eine Knickfestigkeit der Schlauchleitung 200. Dies ermöglicht es, die erste Trägerschicht 203 und die zweite Trägerschicht 205 so zu dimensionieren, dass ein geringer Materialeinsatz und ein geringes Gewicht bei gleichzeitig optimierten mechanischen Eigenschaften erzielt wird. Die erste Trägerschicht 203 bildet gleichzeitig die Deckschicht der Schlauchleitung 200.

In der in Fig. 2 dargestellten Ausführung ist die erste Trägerschicht 203 aus Ethylenacrylat-Elastomer ausgebildet, und die zweite Trägerschicht 205 aus Epichlorhydrin-Elastomer. Jedoch können auch andere geeignete Elastomere verwendet werden, beispielsweise Acrylnitril-Butadien-Elastomer (NBR), Chloropren-Elastomer, Ethylen-Vinylacetat-Elastomer, oder auch chloriertes oder chlorsulfoniertes Polyethylen.

In der in Fig. 2 dargestellten Ausführung weist die Schlauchleitung elektrisch leitfähige Streifen 201 auf. Durch diese kann eine elektrische Aufladung, beispielsweise beim Tankvorgang, verhindert werden, bzw. es können elektrische Ladungen sicher abgeführt werden. Die auf der Innenseite 107 der Schlauchleitung 200 angeordnete erste Sperrschicht 103 weist hier Vertiefungen auf, in denen die elektrisch leitfähigen Streifen 201 angeordnet sind.

In der in Fig. 2 dargestellten Ausführung besteht die erste Sperrschicht 103 wie in der Ausführung aus Fig. 1 aus thermoplastischem Fluorelastomer-Vulkanisat (F-TPV) und die zweite Sperrschicht 105 aus Fluorelastomer (FPM). Auch hier kann die erste Sperrschicht 103 aus thermoplastischem Fluorelastomer-Vulkanisat eine Schichtdicke von 0,28 mm und die zweite Sperrschicht 105 aus Fluorkautschuk eine Schichtdicke von 1,3 mm aufweisen. Die zweite Sperrschicht 105 aus Fluorelastomer, die hier zwischen der ersten Sperrschicht 103 und der zweiten Trägerschicht 205 angeordnet ist, bildet auch in der in Fig. 2 gezeigten Ausführung durch Vulkanisation ein Haftsystem zwischen der ersten Sperrschicht 103 aus Fluorelastomer-Vulkanisat und der zweiten Trägerschicht 205 aus Epichlorhydrin-Elastomer und führt damit neben einer verringerten Diffusion auch zu fertigungstechnischen Vorteilen.

Durch die in Fig. 2 gezeigte Ausführung einer Schlauchleitung 200 mit zwei Sperrschichten 103, 105, zwei Trägerschichten 203, 205 und einer Zwischenschicht 207 wird eine Abdichtung der Schlauchleitung 200 erzielt, mit der sämtliche derzeitigen gesetzlichen Anforderungen an die zulässige Diffusion von Kraftstoffen durch kraftstoffführende Schlauchleitungen erfüllt werden, und es wird gleichzeitig eine hohe mechanische Stabilität und Belastbarkeit sowie der geforderte Schutz vor Beschädigungen durch äußere Einwirkungen, insbesondere betreffend die Einsatzbedingungen von Kraftfahrzeugen erzielt.

Eine Ausführungsform eines Verfahrens zum Herstellen einer erfindungsgemäßen Schlauchleitung 100, 200 für ein Fluid umfasst die folgenden Schritte. Das Bereitstellen einer Trägerschicht 101, das Bereitstellen einer ersten Sperrschicht 103, die ausgebildet ist, die Diffusion des Fluids zu verhindern, das Bereitstellen einer zweiten Sperrschicht 105, das Anordnen der zweiten Sperrschicht 105 auf der Innenseite der Trägerschicht 101, das Anordnen der ersten Sperrschicht 103 auf der Innenseite der zweiten Sperrschicht 105 sowie das Verbinden der Trägerschicht 101 mit der zweiten Sperrschicht 105 und das Verbinden der zweiten Sperrschicht 105 mit der ersten Sperrschicht 103, insbesondere durch Vulkanisation. Die Schichten können auch auf andere Weise als durch Vulkanisation miteinander verbunden werden, beispielsweise durch einen Haftvermittler zum Verkleben der Schichten miteinander. Auch ist es möglich, beispielsweise die zweite Sperrschicht 105 mit der ersten Trägerschicht 101 durch verkleben zu verbinden, und die erste Sperrschicht 103 anschließend mit der zweiten Sperrschicht 105 durch Vulkanisation zu verbinden.

Eine oder mehrere der Schichten 101, 103 und 105 können durch Extrusionsverfahren bereitgestellt. So können beispielsweise die Sperrschichten 103, 105 durch Extrusionsverfahren hergestellt sein, während die Trägerschicht 101 durch ein anderes Verfahren hergestellt wird. Vorzugsweise werden jedoch alle Schichten 101, 103, 105 durch Extrusion hergestellt. Die Zwischenschicht 207 in Form eines textilen Druckträgers kann umflochten, umstrickt oder spiralisiert aufgetragen werden.

### BEZUGSZEICHENLISTE

- 100: Schlauchleitung gemäß einer ersten Ausführung
- 101: Trägerschicht
- 103: erste Sperrschicht
- 105: zweite Sperrschicht
- 107: Innenseite der Schlauchleitung

- 200: Schlauchleitung gemäß einer zweiten Ausführung
- 201: elektrisch leitfähiger Streifen
- 203: erste Trägerschicht
- 205: zweite Trägerschicht
- 207: Zwischenschicht

## Patentansprüche

1. Schlauchleitung (100, 200) für ein Fluid, mit
einer Trägerschicht (101),
einer ersten Sperrschicht (103), die ausgebildet ist, die Diffusion des Fluids zu verhindern,
einer zweiten Sperrschicht (105),
wobei die erste Sperrschicht (103) auf der Innenseite (107) der Schlauchleitung (100, 200) angeordnet ist und die zweite Sperrschicht (105) zwischen der ersten Sperrschicht (103) und der Trägerschicht (101) angeordnet ist,
wobei eine der Sperrschichten (103, 105) überwiegend aus thermoplastischem Fluorelastomer-Vulkanisat und die andere Sperrschicht (103, 105) überwiegend aus einem Fluorelastomer oder aus Fluorkautschuk besteht, und
wobei die Schlauchleitung (200) ferner einen elektrisch leitfähigen Streifen (201) zum Ableiten elektrischer Ladung aufweist, der auf der Innenseite (107) der Schlauchleitung (200) angeordnet ist,
wobei die Schlauchleitung (200) eine erste Trägerschicht (203) sowie eine zweite Trägerschicht (205) aufweist, die relativ zur ersten Trägerschicht (203) im Inneren der Schlauchleitung (200) angeordnet ist, sowie eine Zwischenschicht (207), die zwischen der ersten Trägerschicht (203) und der zweiten Trägerschicht (205) angeordnet ist,
wobei die Zwischenschicht (207) als textiler Druckträger ausgebildet ist und p-Aramid-, POD-, Polyamid- und/oder PET-Fasern umfasst,
wobei der textile Druckträger geflochten, spiralisiert oder gestrickt ist,
wobei die Sperrschicht (103, 105) aus Fluorelastomer-Vulkanisat auf der Innenseite (107) der Schlauchleitung (200) angeordnet ist und damit die erste Sperrschicht (103) bildet und die Sperrschicht (103, 105) aus Fluorelastomer oder Fluorkautschuk zu der Sperrschicht (103, 105) aus Fluorelastomer-Vulkanisat benachbart angeordnet ist und damit die zweite Sperrschicht (105) bildet und wobei die zweite Sperrschicht (105) durch Vulkanisation ein Haftsystem zwischen der ersten Sperrschicht (103) und einer der zweiten Sperrschicht (105) benachbarten Trägerschicht (101, 205) aus Epichlorhydrin-Elastomer, Acrylat-Elastomer oder Ethylenacrylat-Elastomer bildet.

2. Schlauchleitung (100, 200) nach Anspruch 1, wobei die auf der Innenseite (107) der Schlauchleitung (200) angeordnete erste Sperrschicht (103) eine Vertiefung zum Aufnehmen des elektrisch leitfähigen Streifens (201) aufweist.

3. Schlauchleitung (100, 200) nach einem der vorangehenden Ansprüche, wobei das thermoplastische Fluorelastomer-Vulkanisat eine thermoplastische Matrix aus Fluorharzen aufweist, in die Bereiche aus Fluorkautschuk einvulkanisiert sind.

4. Schlauchleitung (100, 200) nach einem der vorangehenden Ansprüche, wobei die Sperrschicht (103, 105) aus thermoplastischem Fluorelastomer-Vulkanisat eine Schichtdicke zwischen 0,15 mm und 3,0 mm und die Sperrschicht (103, 105) aus Fluorelastomer oder Fluorkautschuk eine Schichtdicke zwischen 0,8 mm und 1,5 mm aufweist.

5. Schlauchleitung (100, 200) nach einem der vorangehenden Ansprüche, wobei der elektrisch leitfähige Streifen (201) in radialer Richtung eine Dicke zwischen 30 µm und 60 µm aufweist.

6. Schlauchleitung (100, 200) nach einem der vorangehenden Ansprüche, wobei die Schlauchleitung (100, 200) eine Innenschicht zum Abdecken des elektrischen Streifens (201) auf der Innenseite der ersten Sperrschicht (103) umfasst.

7. Verfahren zum Herstellen einer Schlauchleitung (100, 200) für ein Fluid, wobei das Verfahren die folgenden Schritte umfasst:
das Bereitstellen einer Trägerschicht (101),
das Bereitstellen einer ersten Sperrschicht (103), die ausgebildet ist, die Diffusion des Fluids zu verhindern,
das Bereitstellen einer zweiten Sperrschicht (105),
das Anordnen der zweiten Sperrschicht (105) auf der Innenseite der Trägerschicht (101),
das Anordnen der ersten Sperrschicht (103) auf der Innenseite der zweiten Sperrschichtschicht (105),
das Verbinden der Trägerschicht (101) mit der zweiten Sperrschicht (103) und das Verbinden der zweiten Sperrschicht (105) mit der ersten Sperrschicht (103), wobei
wobei eine der Sperrschichten (103, 105) überwiegend aus thermoplastischem Fluorelastomer-Vulkanisat und die andere Sperrschicht (103, 105) überwiegend aus einem Fluorelastomer oder aus Fluorkautschuk besteht, und wobei
wobei die Schlauchleitung (200) ferner einen elektrisch leitfähigen Streifen (201) zum Ableiten elektrischer Ladung aufweist, der auf der Innenseite (107) der Schlauchleitung (200) angeordnet ist,
wobei die Schlauchleitung (200) eine erste Trägerschicht (203) sowie eine zweite Trägerschicht (205) aufweist, die relativ zur ersten Trägerschicht (203) im Inneren der Schlauchleitung (200) angeordnet ist, sowie eine Zwischenschicht (207), die zwischen der ersten Trägerschicht (203) und der zweiten Trägerschicht (205) angeordnet ist,
wobei die Zwischenschicht (207) als textiler Druckträger ausgebildet ist und p-Aramid-, POD-, Polyamid- und/oder PET-Fasern umfasst,
wobei der textile Druckträger geflochten, spiralisiert oder gestrickt ist,
wobei die Sperrschicht (103, 105) aus Fluorelastomer-Vulkanisat auf der Innenseite (107) der Schlauchleitung (200) angeordnet ist und damit die erste Sperrschicht (103) bildet und die Sperrschicht (103, 105) aus Fluorelastomer oder Fluorkautschuk zu der Sperrschicht (103, 105) aus Fluorelastomer-Vulkanisat benachbart angeordnet ist und damit die zweite Sperrschicht (105) bildet und wobei die zweite Sperrschicht (105) durch Vulkanisation ein Haftsystem zwischen der ersten Sperrschicht (103) und einer der zweiten Sperrschicht (105) benachbarten Trägerschicht (101, 205) aus Epichlorhydrin-Elastomer, Acrylat-Elastomer oder Ethylenacrylat-Elastomer bildet.

8. Verfahren nach Anspruch 7, wobei die Trägerschicht (101), die erste Sperrschicht (103) oder die zweite Sperrschicht (105) durch Extrusion bereitgestellt werden.

## Claims

1. Hose line (100, 200) for a fluid, comprising
a carrier layer (101),
a first barrier layer (103), which is adapted to prevent the diffusion of the fluid,
a second barrier layer (105),
wherein the first barrier layer (103) is arranged on the inner side (107) of the hose line (100, 200) and the second barrier layer (105) is arranged between the first barrier layer (103) and the carrier layer (101),
wherein one of the barrier layers (103, 105) consists predominantly of thermoplastic fluoroelastomer vulcanizate and the other barrier layer (103, 105) consists predominantly of a fluoroelastomer or of fluororubber, and
wherein the hose line (200) further comprises an electrically conductive strip (201) for discharging electrical charge, which electrically conductive strip (201) is arranged on the inner side (107) of the hose line (200),
wherein the hose line (200) comprises a first carrier layer (203) and a second carrier layer (205), which is arranged relative to the first carrier layer (203) inside the hose line (200), and an intermediate layer (207), which is arranged between the first carrier layer (203) and the second carrier layer (205),
wherein the intermediate layer (207) is adapted as a textile printing carrier and comprises p-aramid, POD, polyamide and/or PET fibers,
where the textile printing carrier is braided, spiraled or knitted,
wherein the barrier layer (103, 105) made of fluoroelastomer vulcanizate is arranged on the inner side (107) of the hose line (200) and thus forms the first barrier layer (103) and the barrier layer (103, 105) made of fluoroelastomer or fluororubber is arranged next to the barrier layer (103, 105) made of fluoroelastomer vulcanizate and thus forms the second barrier layer (105), and wherein the second barrier layer (105) forms, by vulcanization, an adhesive system between the first barrier layer (103) and a carrier layer (101, 205), which is made of epichlorohydrin elastomer, acrylate elastomer or ethylene acrylate elastomer and is next to the second barrier layer (105).

2. Hose line (100, 200) according to claim 1, wherein the first barrier layer (103) arranged on the inner side (107) of the hose line (200) comprises a recess for receiving the electrically conductive strip (201).

3. Hose line (100, 200) according to one of the preceding claims, wherein the thermoplastic fluoroelastomer vulcanizate comprises a thermoplastic matrix of fluororesins into which regions of fluororubber are vulcanized.

4. Hose line (100, 200) according to one of the preceding claims, wherein the barrier layer (103, 105) made of thermoplastic fluoroelastomer vulcanizate has a layer thickness between 0.15 mm and 3.0 mm and the barrier layer (103, 105) made of fluoroelastomer or fluororubber has a layer thickness between 0.8 mm and 1.5 mm.

5. Hose line (100, 200) according to one of the preceding claims, wherein the electrically conductive strip (201) has a thickness between 30 µm and 60 µm in the radial direction.

6. Hose line (100, 200) according to any one of the preceding claims, wherein the hose line (100, 200) comprises an inner layer for covering the electrical strip (201) on the inner side of the first barrier layer (103).

7. Method for producing a hose line (100, 200) for a fluid, the method comprising the following steps:
providing a carrier layer (101),
providing a first barrier layer (103), which is adapted to prevent the diffusion of the fluid,
providing a second barrier layer (105),
arranging the second barrier layer (105) on the inner side of the carrier layer (101),
arranging the first barrier layer (103) on the inner side of the second barrier layer (105),
connecting the carrier layer (101) to the second barrier layer (103) and connecting the second barrier layer (105) to the first barrier layer (103), wherein
wherein one of the barrier layers (103, 105) consists predominantly of thermoplastic fluoroelastomer vulcanizate and the other barrier layer (103, 105) consists predominantly of a fluoroelastomer or of fluororubber, and wherein
wherein the hose line (200) further comprises an electrically conductive strip (201) for discharging electrical charge, which electrically conductive strip (201) is arranged on the inner side (107) of the hose line (200),
wherein the hose line (200) comprises a first carrier layer (203) and a second carrier layer (205), which is arranged relative to the first carrier layer (203) inside the hose line (200), and an intermediate layer (207), which is arranged between the first carrier layer (203) and the second carrier layer (205),
wherein the intermediate layer (207) is adapted as a textile printing carrier and comprises p-aramid, POD, polyamide and/or PET fibers,
where the textile printing carrier is braided, spiraled or knitted,
wherein the barrier layer (103, 105) made of fluoroelastomer vulcanizate is arranged on the inner side (107) of the hose line (200) and thus forms the first barrier layer (103), and the barrier layer (103, 105) made of fluoroelastomer or fluororubber is arranged next to the barrier layer (103, 105) made of fluoroelastomer vulcanizate and thus forms the second barrier layer (105), and wherein the second barrier layer (105) forms, by vulcanization, an adhesive system between the first barrier layer (103) and a carrier layer (101, 205), which is made of epichlorohydrin elastomer, acrylate elastomer or ethylene acrylate elastomer and is next to the second barrier layer (105).

8. Method according to claim 7, wherein the carrier layer (101), the first barrier layer (103) or the second barrier layer (105) is provided by extrusion.

## Revendications

1. Conduite flexible (100, 200) pour un fluide, comprenant
une couche porteuse (101),
une première couche barrière (103), qui est adaptée pour empêcher la diffusion du fluide,
une deuxième couche barrière (105),
dans lequel la première couche barrière (103) est disposée sur le côté intérieur (107) du tuyau flexible (100, 200) et la seconde couche barrière (105) est disposée entre la première couche barrière (103) et la couche porteuse (101),
dans laquelle l'une des couches barrières (103, 105) est constituée principalement de vulcanisat de fluoroélastomère thermoplastique et l'autre couche barrière (103, 105) est constituée principalement d'un fluoroélastomère ou de caoutchouc fluoré, et
dans lequel le tuyau flexible (200) comprend en outre une bande électroconductrice (201) pour décharger la charge électrique, laquelle bande électroconductrice (201) est disposée sur le côté intérieur (107) du tuyau flexible (200),
dans laquelle la conduite flexible (200) comprend une première couche porteuse (203) et une seconde couche porteuse (205), qui est disposée par rapport à la première couche porteuse (203) à l'intérieur de la conduite flexible (200), et une couche intermédiaire (207), qui est disposée entre la première couche porteuse (203) et la seconde couche porteuse (205),
dans laquelle la couche intermédiaire (207) est adaptée comme support d'impression textile et comprend des fibres de p-aramide, de POD, de polyamide et/ou de PET,
lorsque le support d'impression textile est tressé, spiralé ou tricoté,
dans laquelle la couche barrière (103, 105) en vulcanisat de fluoroélastomère est disposée sur le côté intérieur (107) du tuyau (200) et forme ainsi la première couche barrière (103) et la couche barrière (103, 105) en fluoroélastomère ou en caoutchouc fluoré est disposée à côté de la couche barrière (103, 105) en vulcanisat de fluoroélastomère et forme ainsi la deuxième couche barrière (105), et dans laquelle la deuxième couche barrière (105) forme, par vulcanisation, un système adhésif entre la première couche barrière (103) et une couche support (101, 205) en élastomère d'épichlorhydrine, en élastomère d'acrylate ou en élastomère d'éthylène-acrylate et est à côté de la deuxième couche barrière (105).

2. Conduite flexible (100, 200) selon la revendication 1, dans laquelle la première couche barrière (103) disposée sur le côté intérieur (107) de la conduite flexible (200) comprend un évidement pour recevoir la bande électroconductrice (201).

3. Conduite flexible (100, 200) selon l'une des revendications précédentes, dans laquelle le vulcanisat de fluoroélastomère thermoplastique comprend une matrice thermoplastique de fluororésines dans laquelle des régions de caoutchouc fluoré sont vulcanisées.

4. Conduite flexible (100, 200) selon l'une des revendications précédentes, dans laquelle la couche barrière (103, 105) en vulcanisat de fluoroélastomère thermoplastique présente une épaisseur de couche comprise entre 0,15 mm et 3,0 mm et la couche barrière (103, 105) en fluoroélastomère ou en caoutchouc fluoré présente une épaisseur de couche comprise entre 0,8 mm et 1,5 mm.

5. Conduite flexible (100, 200) selon l'une des revendications précédentes, dans laquelle la bande électroconductrice (201) présente une épaisseur comprise entre 30 µm et 60 µm dans la direction radiale.

6. Conduite flexible (100, 200) selon l'une quelconque des revendications précédentes, dans laquelle la conduite flexible (100, 200) comprend une couche interne destinée à recouvrir la bande électrique (201) sur le côté interne de la première couche barrière (103).

7. Procédé de fabrication d'une conduite flexible (100, 200) pour un fluide, le procédé comprenant les étapes suivantes :
fournir une couche porteuse (101),
fournir une première couche barrière (103), qui est adaptée pour empêcher la diffusion du fluide,
fournir une deuxième couche barrière (105),
disposer la deuxième couche barrière (105) sur la face intérieure de la couche porteuse (101),
disposer la première couche barrière (103) sur le côté intérieur de la deuxième couche barrière (105),
reliant la couche porteuse (101) à la seconde couche barrière (103) et reliant la seconde couche barrière (105) à la première couche barrière (103), dans lequel
dans laquelle l'une des couches barrières (103, 105) est constituée principalement de vulcanisat de fluoroélastomère thermoplastique et l'autre couche barrière (103, 105) est constituée principalement d'un fluoroélastomère ou de caoutchouc fluoré, et dans laquelle
dans lequel le tuyau flexible (200) comprend en outre une bande électroconductrice (201) pour décharger la charge électrique, laquelle bande électroconductrice (201) est disposée sur le côté intérieur (107) du tuyau flexible (200),
dans laquelle la conduite flexible (200) comprend une première couche porteuse (203) et une seconde couche porteuse (205), qui est disposée par rapport à la première couche porteuse (203) à l'intérieur de la conduite flexible (200), et une couche intermédiaire (207), qui est disposée entre la première couche porteuse (203) et la seconde couche porteuse (205),
dans laquelle la couche intermédiaire (207) est adaptée comme support d'impression textile et comprend des fibres de p-aramide, de POD, de polyamide et/ou de PET,
lorsque le support d'impression textile est tressé, spiralé ou tricoté,
dans laquelle la couche barrière (103, 105) en vulcanisat de fluoroélastomère est disposée sur le côté intérieur (107) du tuyau (200) et forme ainsi la première couche barrière (103), et la couche barrière (103, 105) en fluoroélastomère ou en caoutchouc fluoré est disposée à côté de la couche barrière (103, 105) en vulcanisat de fluoroélastomère et forme ainsi la deuxième couche barrière (105), et dans laquelle la deuxième couche barrière (105) forme, par vulcanisation, un système adhésif entre la première couche barrière (103) et une couche support (101, 205), qui est constituée d'élastomère d'épichlorhydrine, d'élastomère d'acrylate ou d'élastomère d'éthylène-acrylate et est à côté de la deuxième couche barrière (105).

8. Procédé selon la revendication 7, dans lequel la couche porteuse (101), la première couche barrière (103) ou la deuxième couche barrière (105) est fournie par extrusion.
